# EUROPEAN PATENT SPECIFICATION

(11) **EP 2 097 318 B1**
(45) Date of publication and mention of the grant of the patent: **21.09.2011**
(21) Application number: 07856291.5
(22) Date of filing: 28.11.2007
(51) Int. Cl.: B64D 27/02

(54) **PROPULSION DEVICE FOR OPERATION WITH A PLURALITY OF FUELS FOR AN AIRCRAFT**
ANTRIEBSVORRICHTUNG ZUM BETRIEB MIT MEHREREN TREIBSTOFFEN FÜR EIN FLUGZEUG
DISPOSITIF DE PROPULSION DESTINÉ À ÊTRE UTILISÉ AVEC UNE PLURALITÉ DE COMBUSTIBLES DESTINÉS À UN AVION

(30) Priority: 29.11.2006 DE 102006056355; 29.11.2006 US 861628 P
(43) Date of publication of application: 09.09.2009
(73) Proprietor: Airbus Operations GmbH, 21129 Hamburg (DE)
(72) Inventor: WESTENBERGER, Andreas, 21614 Buxtehude (DE)
(74) Representative: Kopf, Korbinian Paul
(86) International application number: PCT/EP2007/010326
(87) International publication number: WO 2008/064881

(56) References cited:
- FR-A- 1 511 665
- GB-A- 2 376 928
- US-A- 3 388 684
- US-A- 3 825 027
- US-A1- 2003 075 643
- US-B1- 6 306 056

## Description

### Field of the Invention

The present invention relates to a propulsion device and to a method for propelling an aircraft, to the use of a propulsion device in an aircraft, and to an aircraft comprising a propulsion device.

### Background to the invention

At present, air traffic accounts for a small share in the global crude oil consumption and in air pollution. However, this share is increasing as the other air-polluting means of transport decrease and air traffic increases. Furthermore, the improvement potential and development potential of present-day civil commercial aircraft have arrived at a point where only with very large expenditure is it possible to achieve even slight improvements.

For these reasons attempts are being made to render the noxious gases of aircraft engines more environmentally sustainable either by using certain types of fuel, or to reduce fuel consumption with the use of certain propulsion systems.

Aircraft featuring hybrid propulsion systems are known in an attempt to reduce pollutants. In this arrangement, aircraft forward thrust is achieved by a combination of various engines. The following are, for example, common combinations: piston engines and jet engines; piston engines and rocket engines; jet engines and rocket engines; or turbojet engines and ramjet engines. These hybrid propulsion systems were, for example, implemented in the experimental aircraft Mikojan-Gurevich MiG-13 or the Nord 1500 Griffon. Each hybrid propulsion system comprises a propulsion unit with an associated engine. A piston powerplant comprises, for example, a piston engine for generating propulsion energy, and an airscrew or propeller, while the jet engine comprises a combustion chamber for generating propulsion energy, and a compressor. If forward thrust from one propulsion unit, for example the piston engine, is not used, then the propeller remains in the airstream and generates air resistance or drag.

GB 2 376 928 A describes a tilt motor aircraft with a multitude of motors. Combustion engines and emergency electric motors are provided.

US 3 825 027 A describes a float controlled fuel tank control valve assembly for automatically supplying fuel to an engine from one of several fuel tanks connected to the engine when the fuel and the selected tank is exhausted.

US 2003/0075643 A1 describes an electrically powered aircraft having fuel cells as source of electrical energy.

FR 1 511 665 A describes an aircraft which has a propeller driven by two engines.

US 3 388 684 A describes a drive installation for boats having an internal combustion engine drivingly connected to the propeller shaft by means of parallelly connected hydrodynamic torque converter and direct drive friction clutch.

US 6,306,056 B1 describes a dual engine hybrid electric vehicle including a first engine system, a second engine system and an electric motor. During normal driving conditions, a single engine is utilized for providing driving torque to the drive wheels. The second engine can be started to assist the first engine and providing the driving torque.

### Summary of the invention

Among other things, it may be an object of the present invention to reduce pollutant emission of a propulsion device.

According to an aspect of the invention, a propulsion device for an aircraft is provided. The propulsion device comprises a propulsion unit and an energy converter. The energy converter is adapted for providing propulsion energy to the propulsion unit by a first fuel. Furthermore, the energy converter is adapted for providing propulsion energy to the propulsion unit by a second fuel. The propulsion unit is adapted for generating forward thrust by the propulsion energy. The first fuel and the second fuel are different liquid fuels. A control unit is provided which controls the provision of the first fuel and of the second fuel to the energy converter.

According to a further aspect of the invention, a method for propelling an aircraft is provided. A first fuel and/or a second fuel is made available to an energy converter. Provision of the first fuel and of the second fuel to the energy converter is controlled. Propulsion energy for a propulsion unit is generated with the energy converter by the first fuel and/or by the second fuel. Furthermore, the propulsion unit is supplied with propulsion energy. Forward thrust is generated from the propulsion energy by the propulsion unit wherein the first fuel and the second fuel are different fuels and wherein the energy converter is an engine suited to several different fuels.

According to a further aspect the propulsion device described above is used in an aircraft.

According to a further exemplary embodiment, an aircraft with the propulsion device described above is provided.

The term "energy converters" may refer to machines that convert energy. These may, for example, comprise internal combustion engines which, based on fuels, generate a propulsion moment or propulsion energy. Furthermore, energy converters may comprise combustion chambers which, based on kerosene, generate propulsion energy.

The term "propulsion unit" refers to devices that may generate aircraft forward thrust. Such a propulsion unit may, for example, be a propeller or an airscrew which based on its rotation generates aircraft forward thrust. Moreover, for example a compressor stage or a fan of an aircraft engine may be a propulsion unit, because the fan or the compressor blades generate an air stream and thus forward thrust. A further propulsion unit may comprise a rocket engine or a ramjet engine.

The term "propulsion energy" refers to the energy that the propulsion unit requires to be able to generate aircraft forward thrust. Propulsion energy may, for example, be transmitted, in the form of torque, to a shaft.

By the propulsion device the energy converter used may convert two different fuels, for example kerosene as the first fuel and hydrogen as the second fuel, to propulsion energy. Internal combustion engines, for example turbo engines with variable combustion chambers, or piston engines or planetary piston engines with variable control times, may be used as energy converters. Since the motors or the energy converters are suited to several different fuels, depending on the flight phase of an aircraft, the emissions and the output could be set to whichever fuel is more favourable or more suitable at that time. Thus, depending on the flight phase, a favourable energy carrier could be used. For example, a more environmentally friendly fuel could be fed to the energy converter when the plane is in the vicinity of an airport, while a less environmentally friendly fuel is used when the plane is at high altitudes or in non-critical regions. With the exemplary embodiment the first energy converter may be a bivalent energy converter which may generate propulsion energy from several different fuels. Examples of such energy converters include, for example, turbo engines with variable combustion chambers, or piston engines or planetary piston engines with variable control times. The energy converters are thus suitable for various fuels or energy carriers. In this way the ecological impact may be reduced.

According to a further exemplary embodiment, the propulsion device further comprises a first tank and a second tank. The first tank is adapted for making the first fuel available to the energy converter, and the second tank is adapted for making the second fuel available to the energy converter.

According to the invention, the first fuel differs from the second fuel.

The term "fuel" refers to the educt of the energy converters, from which educt the propulsion energy arises as a product. The fuels are, for example, converted to propulsion energy, by an external reaction, with the use of the energy converters. The fuels may, for example, comprise conventional fuels, for example hydrocarbons such as petrol, kerosene, diesel, hydrogen, methane, natural gas or synthetic hydrocarbons. Furthermore, environmentally friendly fuels may be provided as energy carriers with conventional technical properties, for example synthetic hydrocarbons whose properties are similar to those of kerosene, which synthetic hydrocarbons are made from coal, gas or biomass and mixtures thereof. Furthermore, environmentally friendly fuels may also comprise unconventional properties, for example thermally unstable or gaseous energy carriers. This includes, for example, easily liquefiable hydrocarbons, hydrocarbon gases or hydrogens.

According to a further exemplary embodiment, at least one of the first fuels and of the second fuels is selected from the group comprising petrol, kerosene, diesel, hydrogen, methane, natural gas and synthetic hydrocarbons.

According to a further exemplary embodiment, the propulsion device further comprises a further energy converter for generating second propulsion energy. According to the exemplary embodiment, the propulsion device may now comprise two or more energy converters in order to propel a propulsion unit. The propulsion device may, for example, be designed such that one propulsion unit, for example the turbine stage of a jet engine, comprises two combustion chambers. In each case the first energy converter and the further energy converter, either together or separately of each other, may provide first propulsion energy to second propulsion energy to the propulsion unit so that said propulsion unit may generate forward thrust of the aircraft.

In this way a propulsion device may be created that comprises several energy converters without the need for a multitude of propulsion units. The previous use of several propulsion units, each comprising an energy converter, may reduce the output due to the multitude of components, because frictional losses may result in this way. By the supply, according to the invention, of propulsion energy to a propulsion unit by a first energy converter and a further energy converter, the power loss may thus be reduced and the efficiency of the propulsion device may be improved. This in turn may reduce fuel emission and thus pollutant emission.

According to a further exemplary embodiment, the first tank is adapted for making the first fuel available to the further energy converter. The second tank is adapted for making the second fuel available to the further energy converter. The further energy converter is further equipped, by the first fuel or by the second fuel, to provide propulsion energy to the propulsion unit. The aircraft's propulsion device according to the invention may now comprise two energy converters in order to propel a propulsion unit. This may, for example, be designed such that a propulsion unit, for example a turbine stage of a jet engine, comprises two combustion chambers. In each case the first energy converter and the further energy converter, either together or separately of each other, may provide first propulsion energy in second propulsion energy to the propulsion unit, so that the latter may generate forward thrust of the aircraft.

According to a further exemplary embodiment, the propulsion device further comprises a third tank with a third fuel, and a fourth tank with a fourth fuel, wherein the further energy converter is designed, by the third fuel or by the fourth fuel, to make propulsion energy available to the propulsion unit. The energy converter and the further energy converter may thus be supplied with fuel independently of each other so that the risk of failure may be reduced.

According to a further exemplary embodiment, the first energy converter differs from the further energy converter. This means that various concepts of energy converters may be used in order to generate propulsion energy. These different energy converters may, for example, comprise an internal combustion engine and an electric motor, and may be fed the respective fuels needed. In this way, for example, both redundancy and safety may be improved, or an ecological advantage may be gained. For example, in cruising flight it is possible to operate only the environmentally friendly and low-polluting electric motor, while during takeoff and landing the powerful, but high-polluting, internal combustion engine may additionally activated in order to provide propulsion energy to the propulsion unit.

According to a further exemplary embodiment of the invention, the propulsion device further comprises a first propulsion shaft and a second propulsion shaft. The first propulsion shaft is adapted to transmit the first propulsion energy of the first energy converter to the propulsion unit. The second propulsion shaft is equipped to transmit the second propulsion energy of the further energy converter to the propulsion unit. Thus in the case of a defect of a propulsion shaft, the propulsion unit may nevertheless be supplied with propulsion energy, so that the risk of the propulsion unit failing may be reduced.

According to a further exemplary embodiment of the invention, the propulsion device comprises a first coupling device. The first propulsion shaft and the second propulsion shaft may be coupled by the first coupling device. By the exemplary embodiment it is, for example, possible to permanently and rigidly connect an energy converter to the propulsion device, while the further energy converter may be connected, temporarily only, by way of the second propulsion shaft, to the first propulsion shaft for transmitting the propulsion energy. This may provide the option of connecting the further energy converter only when required. For example, during cruising flight of an aircraft, by the coupling device, the further energy converter with the second propulsion shaft could be separated from the first propulsion shaft, and the further energy converter could be switched off. The aircraft could thus, for example, take off and land with two engines, and cruise with one engine. Thus, the output of the propulsion device could economically be matched to a given requirement, without generating unnecessary loss of output. Since the second propulsion shaft may be decoupled by the coupling device, the second propulsion shaft, if it is not needed, need not rotate simultaneously in idle, so that no additional drag on the first propulsion shaft may arise.

According to a further exemplary embodiment, the propulsion device comprises a second coupling device and a third coupling device. The first propulsion shaft may be coupled to the propulsion unit by the second coupling device so that the first propulsion energy may be transmitted to the propulsion unit. The second propulsion shaft may be coupled to the propulsion unit by the third coupling device so that the second propulsion energy may be transmitted to the propulsion unit. If one of the energy converters, i.e. the first energy converter or the further energy converter, is switched off, it may be individually separated from the first propulsion shaft or from the second propulsion shaft by the second coupling unit or the third coupling unit. This provides an advantage in that, for example, the number of operating hours may, by the first energy converter or the further energy converter in the case of single-engine operation, be selectively distributed evenly to both energy converters. In this way wear and tear of each energy converter may be reduced and cost savings may be achieved.

According to a further exemplary embodiment, the propulsion device further comprises a control unit, wherein the control unit is adapted for controlling at least one converter from the energy converter and the further energy converter. The control unit may thus, for example, set which fuel is made available to the energy converter or to the further energy converter. Thus by selecting the fuels, the control unit may set an output or a determined pollutant emission level.

According to a further exemplary embodiment of the present invention, the control device controls the first energy converter and the further energy converter such that in a first operating state the first propulsion energy and the second propulsion energy may be provided to the propulsion unit. Furthermore, the control device controls the first energy converter and the further energy converter such that in a second operating state the first propulsion energy or the second propulsion energy may be provided to the propulsion unit. Thus, depending on the flight phase, a first operating state or a second operating state may be selected, which may be set by the control unit. For example, if a lot of propulsion energy is required from the propulsion device, the control unit automatically switches to the first operating state, while if less output is required, the control device switches to the second operating state in that the first energy converter or the further energy converter generates propulsion energy. In this way unnecessary energy consumption may be avoided. For example, with the propulsion device at cruise, in which state less propulsion energy is required, the first energy converter or the further energy converter may be completely separated. In this way loss resulting from friction energy, and loss where one of the energy converters, for example, rotates at idle, may be reduced.

According to a further exemplary embodiment, at least one of the first fuels and of the second fuels is a fuel selected from the group comprising petrol, kerosene, diesel, hydrogen, methane, natural gas, and synthetic hydrocarbons.

According to a further exemplary embodiment, the control unit may be controlled manually.

According to the invention, the control unit is equipped to control the provision of the first fuel and of the second fuel to at least one converter from the energy converter and the further energy converters. Depending on output requirements, the control unit may automatically provide a determined first fuel or second fuel to the energy converter, and may thus set the power and pollutant emission level of the propulsion device.

According to a further exemplary embodiment, at least one converter from the energy converter and the further energy converter is selected from the group comprising turbo engines, turbo engines with variable combustion chambers, piston engines, planetary piston engines, electric motors, gas turbines and fuel cells.

According to a further exemplary embodiment of the method, the first fuel or the second fuel is provided to the energy converter depending on a predetermined flight phase. For example, in an output-intensive take-off phase a fuel comprising more take-off energy may be used, wherein in a landing phase a more environmentally friendly fuel is used. The propulsion output or the energy converter may thus be set to a given flight phase. By designing the energy converter in relation to exhaust gases and output, both costs and pollutant emissions may be reduced.

According to a further exemplary embodiment of the aircraft, the aircraft has an external contour, wherein the energy converter is arranged within the external contour.

The embodiments of the device also apply to the method, the use and the aircraft and vice versa.

### Brief description of the drawings

Below, for further explanation and for a better understanding of the present invention, exemplary embodiments are described in more detail with reference to the enclosed drawings. The following are shown:
- Fig. 1: a diagrammatic view of a known propulsion device;
- Fig. 2: a diagrammatic view of an exemplary embodiment of a bivalent energy converter that comprises two fuel supply lines;
- Fig. 3: a diagrammatic view of an exemplary embodiment with two energy converters and two fuels;
- Fig. 4: a diagrammatic view with two energy converters and two coupling devices according to one exemplary embodiment;
- Fig. 5: a diagrammatic view of a propulsion device with two energy converters and two tanks according to one exemplary embodiment;
- Fig. 6: an exemplary embodiment with two energy converters and two fuel tanks.

### Detailed Description of the Exemplary Embodiments

Identical or similar components in different figures have the same reference characters. The illustrations in the figures are diagrammatic and not to scale.

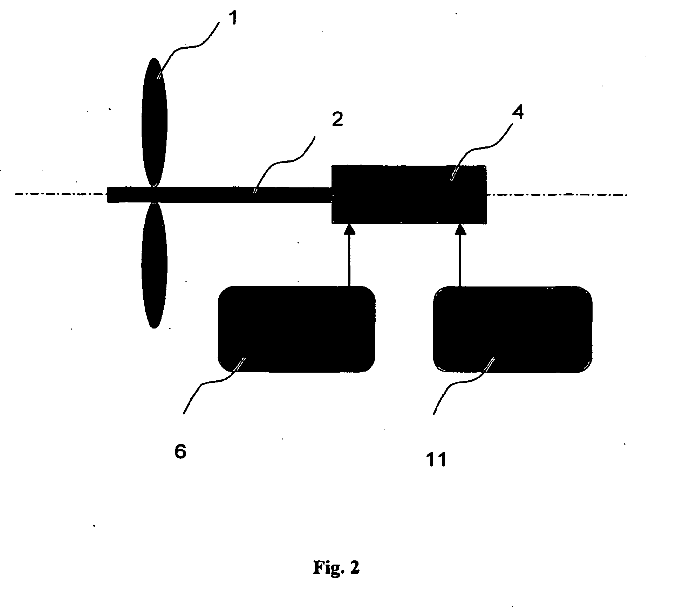

Fig. 2 shows an exemplary embodiment of an energy converter 4, 5 which receives a first fuel from a first tank 6, and a second fuel from a second tank 11. In this arrangement, the first fuel and the second fuel may be different. The energy converter 4, 5 may thus be bivalent or constructed in a hybrid design. This means that the energy converter 4, 5 may, for example, on the one hand generate propulsion energy by conventional kerosene fuels, and on the other hand, for example, by nonconventional fuels, for example natural gas. In this way, depending on the economic and ecological requirements, fuel supply by a first or a second fuel may be selected so that the propulsion device may provide propulsion energy or forward thrust in an efficient and environmentally friendly manner. It is thus possible, for example, to use environmentally friendly fuels in centres of population such as in proximity to airports, and to use efficient fuels, which, however, are associated with an increased amount of pollutants, in cruising flight.

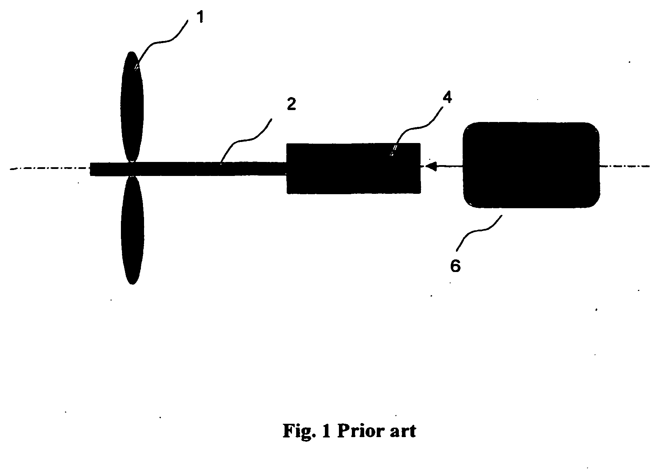

Fig. 1 shows a propulsion device known from the state of the art. A propulsion unit 1 is connected to a first energy converter 4 by way of a first propulsion shaft 2. From a tank 6 the first energy converter 4 obtains fuel, which the first energy converter 4 converts to propulsion energy. The propulsion energy is provided to the propulsion unit 1 by the first propulsion shaft 2. For example, an airscrew or propeller 1 is supplied with propulsion energy by way of a first propulsion shaft 2, which propulsion energy is, for example, provided by a piston engine 4.

Fig. 2 shows, as already described, a first exemplary embodiment of the present invention. By a first propulsion shaft 2 and a second propulsion shaft 7, the first energy converter 4 and the further energy converter 5 provide first propulsion energy and second propulsion energy to the propulsion unit 1. The first energy converter 4 and the further energy converter 5 may be coupled by way of a coupling device 3. Both energy converters may receive a first fuel from a first tank 6. From the first fuel of the first tank 6 the two energy converters 4, 5 may generate propulsion energy.

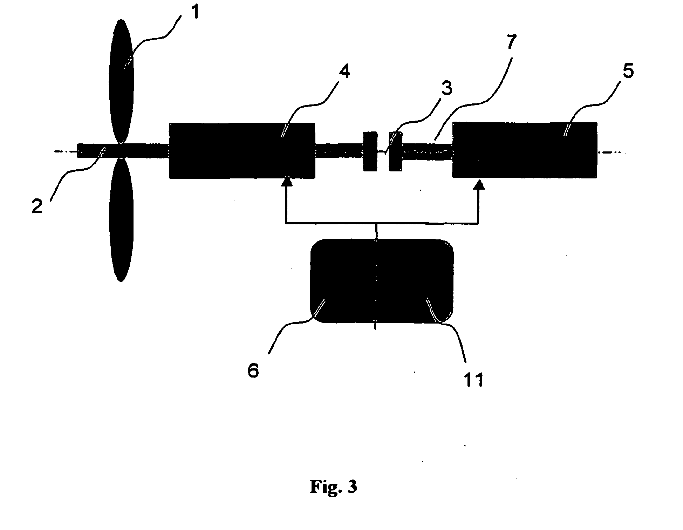

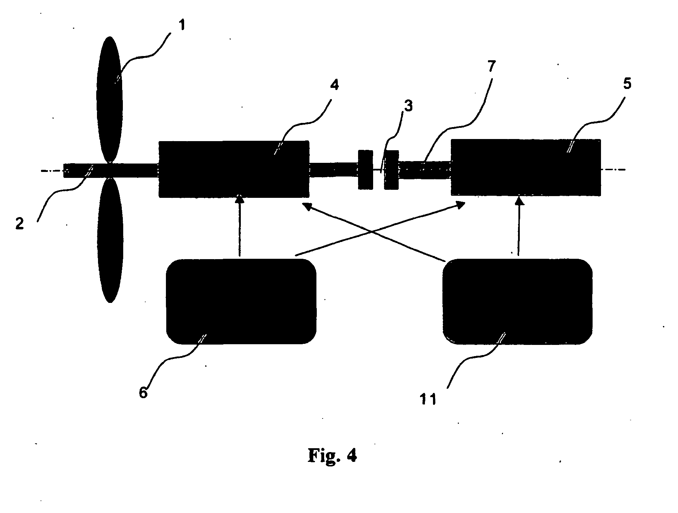

Figs 3 and 4 show an exemplary embodiment of the propulsion device for an aircraft. The propulsion device comprises a first energy converter 4, a further energy converter 5, as well as a propulsion unit 1. The first energy converter 4 provides first propulsion energy, and the further energy converter 5 provides second propulsion energy. In this arrangement the first energy converter 4 and the further energy converter 5 are equipped to provide the propulsion unit 1 with the first propulsion energy and the second propulsion energy. The propulsion device 1 may generate forward thrust from the first propulsion energy and from the second propulsion energy.

By a coupling device 3, depending on requirements, the second propulsion shaft 7 may be connected to the first propulsion shaft 2 so that the further energy converter 5 provides second propulsion energy to the propulsion unit 1. For example, if little propulsion energy is required, the second propulsion shaft 7 may be decoupled from the first propulsion shaft 2 by the coupling device 3 so that only the first propulsion shaft 2 with the first energy converter 4 provides first propulsion energy. Unnecessary idling of the propulsion shaft 7 and thus of the further energy converter 5 is thus prevented so that loss, for example due to friction, may be prevented.

Furthermore, the design of the first energy converter and of the further energy converter may differ.

With the exemplary embodiments according to Fig. 3 or 4 it is possible to set an energy requirement of propulsion energy depending on the flight phase. For example, in a takeoff or landing phase an aircraft may generate propulsion energy with both energy converters, while in cruising flight it may generate propulsion energy with only one energy converter. In this way it may be possible to efficiently provide propulsion energy as required, without experiencing very substantial energy loss.

Fig. 4 shows a further exemplary embodiment in which each energy converter has a tank 6, 11 of its own. Thus the first energy converter 4 has a first tank 6, and the further energy converter 5 has a second tank 11. The further energy converter may be connected to the second propulsion shaft 2 by the second propulsion shaft 7 by way of the first coupling device 3. This provides the option of using different energy converters 4, 5, which moreover use different fuels. In this way, depending on requirements, the suitable characteristics of the individual energy converters 4, 5 may be used. For example, if the aircraft is in the vicinity of an airport, the propulsion energy may, for example, be generated by an environmentally friendly energy converter 4, 5.

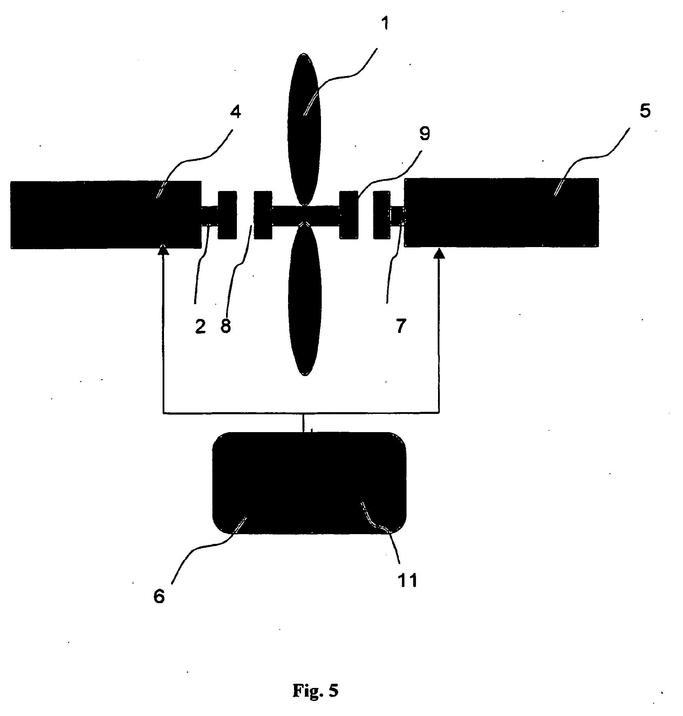

Fig. 5 shows a further exemplary embodiment of the propulsion device. As shown in Fig. 3 or 4, the first energy converter may be connected to the propulsion unit 1 by a first coupling unit 8, and the further energy converter 5 may be connected to the propulsion unit 1 by the third coupling device 8. The number of service hours of the first energy converter 4 and of the further energy converter 5 may thus be evenly distributed. For example, in the case of single-engine operation, the number of service hours may be evenly divided between the two energy converters 4, 5. In this wary different service cycles of the individual energy converters may be prevented, so that the maintenance effort and thus maintenance expenditure are reduced.

Furthermore, for example, at different flight altitudes a particular energy converter 4, 5 may be used. If an energy converter 4, 5 is, for example, operated with hydrogen, water arises as exhaust gas. At altitudes below 10,000 m this water remains in the atmosphere for only 2 weeks to a maximum of 6 weeks. On the other hand, it is often believed that CO2 remains in the atmosphere for up to approximately 100 years. Thus, for example, the hydrogen-operated energy converter may be used up to 10,000 m, and from 10,000 m conventional propulsion with a combustion chamber as an energy converter may be used. Thus, apart from economic aspects, the propulsion device may also be set to ecological aspects.

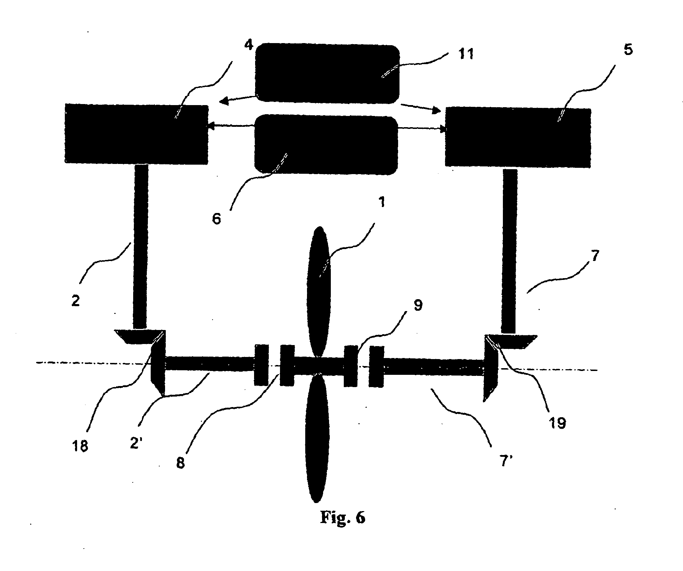

Fig. 6 shows an exemplary embodiment of the invention with a first energy converter 4 and a further energy converter 5, which obtain fuel from a first tank 6. The respective propulsion energy of the first energy converter 4 or of the further energy converter 5 may be transmitted to the propulsion unit 1 by way of propulsion shafts 2, 2' and second propulsion shafts 7, 7'. By way of, for example, various gear arrangements such as a first bevel gear arrangement 18 and a second bevel gear arrangement 19, the respective propulsion energies may be transmitted along considerable distances to the propulsion unit 1. Thus, for example, the first energy converter and/or the further energy converter may be arranged so as to be away from the first propulsion unit 1. The energy converters 4, 5 may be connected, as required, by way of the second coupling device 8 or the third coupling device 9.

It may thus be possible, for example, to integrate the tank 6 and the first energy converter 4 and the further energy converter 5 in an aircraft. If the first energy converter 4, the further energy converter 5 and the tank 6 are situated, for example, within an exterior contour of the aircraft, then only the propulsion unit 1 is in the free air stream outside the exterior contour of the aircraft. It may thus be possible to reduce drag so that the loss due to flow resistance is reduced.

In order to control the coupling devices 3, 8, 9 of the energy converters 6, 11, a control unit may be used which automatically and in a self-acting manner, depending on requirements, may connect the first energy converter 4 or the further energy converter 5 for generating propulsion energy. In this way, apart from manual control of the first propulsion energy or of the second propulsion energy, automatic control may take place so that an improved economic and ecologically friendly propulsion device may be provided.

In addition, it should be pointed out that "comprising" does not exclude other elements or steps, and "a" or "one" does not exclude a plural number. Furthermore, it should be pointed out that characteristics or steps which have been described with reference to one of the above exemplary embodiments may also be used in combination with other characteristics or steps of other exemplary embodiments described above. Reference characters in the claims are not to be interpreted as limitations.

## Claims

1. A propulsion device for an aircraft, wherein the propulsion device comprises:
a propulsion unit (1);
an energy converter (4);
a control unit;
wherein the energy converter (4) is adapted for providing propulsion energy to the propulsion unit (1) by at least one first fuel;
wherein the energy converter (4) is adapted for providing propulsion energy to the propulsion unit (1) by at least one second fuel;
wherein the first fuel and the second fuel are different liquid fuels;
wherein the energy converter (4) is an engine suited to several different fuels;
wherein the propulsion unit (1) is adapted for generating forward thrust by the propulsion energy; and
wherein the control unit is adapted for controlling the provision of the first fuel and of the second fuel to the energy.converter (4).

2. The propulsion device of claim 1, further comprising:
a first tank (6);
a second tank (11);
wherein the first tank (6) is adapted for making the first fuel available to the energy converter (4);
wherein the second tank (11) is adapted for making the second fuel available to the energy converter (4).

3. The propulsion device of any one of claims 1 to 2, further comprising:
a further energy converter (5) for generating second propulsion energy.

4. The propulsion device of claim 3;
wherein the first tank (6) is adapted for making the first fuel available to the further energy converter (5);
wherein the second tank (11) is adapted for making the second fuel available to the further energy converter (5);
wherein the further energy converter (5) is adapted for providing, propulsion energy to the propulsion unit (1) by the first fuel or by the second fuel.

5. The propulsion device of claim 3, further comprising:
a third tank with a third fuel; and
a fourth tank with a fourth fuel;
wherein the further energy converter (4) is adapted for providing propulsion energy to the propulsion unit (1) by the third fuel or by the fourth fuel.

6. The propulsion device of any one of claims 3 to 5;
wherein the first energy converter (4) differs from the further energy converter (5).

7. The propulsion device of any one of claims 3 to 6, further comprising:
a first propulsion shaft (2); and
a second propulsion shaft (7);
wherein the first propulsion shaft (2) is adapted for transmitting the first propulsion energy of the energy converter (4) to the propulsion unit (1);
wherein the second propulsion shaft (7) is adapted for transmitting the second propulsion energy of the further energy converter (5) to the propulsion unit (1).

8. The propulsion device of any one of claims 3 to 7, further comprising:
a first coupling device (3);
wherein the first propulsion shaft (2) and the second propulsion shaft (7) may be coupled by the first coupling device (3).

9. The propulsion device of any one of claims 3 to 8, further comprising:
a second coupling device (8);
a third coupling device (9);
wherein the first propulsion shaft (2) is coupled to the propulsion unit (1) by the second coupling device (8), so that the first propulsion energy is transmittable to the propulsion unit (1);
wherein the second propulsion shaft (7) is coupled to the propulsion unit (1) by the third coupling device (9), so that the second propulsion energy is transmittable to the propulsion unit (1).

10. The propulsion device of any one of claims 3 to 9, further comprising:
a control unit;
wherein the control unit is adapted for controlling at least one converter from the energy converter (4) and the further energy converters (5).

11. The propulsion device of claim 10;
wherein the control device is adapted for controlling the energy converter (4) and the further energy converter (5), so that in a first operating state the first propulsion energy and the second propulsion energy is providable to the propulsion unit (1);
wherein the control device is adapted for controlling the energy converter (4) and the further energy converter (5), so that in a second operating state the first propulsion energy or the second propulsion energy is providable to the propulsion unit (1).

12. A method for propelling an aircraft, wherein the method involves:
providing a first fuel to an energy converter (4);
providing a second fuel to the energy converter (4);
controlling the provision of the first fuel and of the second fuel to the energy converter (4);
generating propulsion energy with the energy converter (4) by at least one of the first fuels and the second fuels;
supplying a propulsion unit (1) with the propulsion energy;
generating forward thrust by the propulsion unit (1);
wherein the first fuel and the second fuel are different liquid fuels;
wherein the energy converter (4) is an engine suited to several different fuels.

13. The method of claim 12,
providing the first fuel or the second fuel to the energy converter (4) depending on a predetermined flight phase.

14. The use of a propulsion device of any one of claims 1 to 11 in an aircraft.

15. An aircraft comprising a propulsion device of any one of claims 1 to 11.

## Patentansprüche

1. Antriebsvorrichtung für ein Flugzeug, wobei die Antriebsvorrichtung aufweist:
eine Antriebseinheit (1);
einen Energiewandler (4);
eine Steuereinheit;
wobei der Energiewandler (4) eingerichtet ist, mittels zumindest eines ersten Kraftstoffs eine Antriebsenergie der Antriebseinheit (1) bereitzustellen;
wobei der Energiewandler (4) eingerichtet ist, mittels zumindest eines zweiten Kraftstoffs die Antriebsenergie der Antriebseinheit (1) bereitzustellen;
wobei der erste Kraftstoff und der zweite Kraftstoff unterschiedliche flüssige Kraftstoffe sind;
wobei der Energiewandler (4) ein Motor ist, der für mehrere unterschiedliche Kraftstoffe geeignet ist;
wobei die Antriebseinheit (1) eingerichtet ist, mittels der Antriebsenergie einen Vorschub zu erzeugen; und
wobei die Steuereinheit eingerichtet ist, die Bereitstellung des ersten Kraftstoffs und des zweiten Kraftstoffs an den Energiewandler (4) zu steuern.

2. Antriebsvorrichtung nach Anspruch 1 ferner aufweisend:
einen ersten Tank (6);
einen zweiten Tank (11);
wobei der ersten Tank (6) eingerichtet ist, dem Energiewandler (4) den ersten Kraftstoff bereitzustellen;
wobei der zweite Tank (11) eingerichtet ist, dem Energiewandler (4) den zweiten Kraftstoff bereitzustellen.

3. Antriebsvorrichtung nach einem der Ansprüche 1 bis 2, ferner aufweisend:
einen weiteren Energiewandler (5) zum Erzeugen einer zweiten Antriebsenergie.

4. Antriebsvorrichtung nach Anspruch 3;
wobei der erste Tank (6) eingerichtet ist, dem weiteren Energiewandler (5) den ersten Kraftstoff bereitzustellen;
wobei der zweite Tank (11) eingerichtet ist, dem weiteren Energiewandler (5) den zweiten Kraftstoff bereitzustellen;
wobei der weitere Energiewandler (5) eingerichtet ist, mittels des ersten Kraftstoffs oder mittels des zweiten Kraftstoffs eine Antriebsenergie der Antriebseinheit (1) bereitzustellen.

5. Antriebsvorrichtung nach Anspruch 3, ferner aufweisend:
einen dritten Tank mit einem dritten Kraftstoff; und
einen vierten Tank mit einem vierten Kraftstoff;
wobei der weitere Energiewandler (4) eingerichtet ist, mittels des dritten Kraftstoffs oder mittels des vierten Kraftstoffs eine Antriebsenergie der Antriebseinheit (1) bereitzustellen.

6. Antriebsvorrichtung nach einem der Ansprüche 3 bis 5;
wobei sich der erste Energiewandler (4) vom weiteren Energiewandler (5) unterscheidet.

7. Antriebsvorrichtung nach einem der Ansprüche 3 bis 6, ferner aufweisend:
eine erste Antriebswelle (2); und
eine zweite Antriebswelle (7);
wobei die erste Antriebswelle (2) eingerichtet ist, die erste Antriebsenergie des Energiewandlers (4) an die Antriebseinheit (1) zu übertragen;
wobei die zweite Antriebswelle (2) eingerichtet ist, die zweite Antriebsenergie des weiteren Energiewandlers (5) an die Antriebseinheit (1) zu übertragen.

8. Antriebsvorrichtung nach einem der Ansprüche 3 bis 7, ferner aufweisend:
eine erste Kupplungseinrichtung (3);
wobei die erste Antriebswelle (2) und die zweite Antriebswelle (7) mittels der ersten Kupplungseinrichtung (3) gekoppelt werden können.

9. Antriebsvorrichtung nach einem der Ansprüche 3 bis 8, ferner aufweisend:
eine zweite Kupplungseinrichtung (8);
eine dritte Kupplungseinrichtung (9);
wobei die erste Antriebswelle (2) mittels der zweiten Kupplungseinrichtung (8) mit der Antriebseinheit (1) derart gekoppelt ist, dass die erste Antriebsenergie an die Antriebseinheit (1) übertragbar ist;
wobei die zweite Antriebswelle (7) mittels der dritten Kupplungseinrichtung (9) mit der Antriebseinheit (1) derart gekoppelt ist, dass die zweite Antriebsenergie an die Antriebseinheit (1) übertragbar ist.

10. Antriebsvorrichtung nach einem der Ansprüche 3 bis 9, ferner aufweisend:
eine Steuereinheit;
wobei die Steuereinheit eingerichtet ist, zumindest den Energiewandler (4) oder zumindest einen der weiteren Energiewandler (5) zu steuern.

11. Antriebsvorrichtung nach Anspruch 10,
wobei die Steuereinrichtung den Energiewandler (4) und den weiteren Energiewandler (5) derart steuert, dass in einem ersten Betriebszustand die erste Antriebsenergie und die zweite Antriebsenergie der Antriebseinheit (1) bereitstellbar ist;
wobei die Steuereinrichtung den Energiewandler (4) und den weiteren Energiewandler (5) derart steuert, dass in einem zweiten Betriebszustand die erste Antriebsenergie oder die zweite Antriebsenergie der Antriebseinheit (1) bereitstellbar ist.

12. Verfahren zum Antrieb eines Luftfahrzeugs, wobei das Verfahren aufweist:
Bereitstellen eines ersten Kraftstoffs an einen Energiewandler (4);
Bereitstellen eines zweiten Kraftstoffs an den Energiewandler (4);
Steuern der Bereitstellung des ersten Kraftstoffs und des zweiten Kraftstoffs an den Energiewandler (4) ;
Erzeugen einer Antriebsenergie mit dem Energiewandler (4) mittels zumindest einem der ersten Kraftstoffe und der zweiten Kraftstoffe;
Versorgen einer Antriebseinheit (1) mit der Antriebsenergie;
Erzeugen eines Vorschubs mittels der Antriebseinheit (1);
wobei der erste Kraftstoff und der zweite Kraftstoff unterschiedliche flüssige Kraftstoffe sind;
wobei der Energiewandler (4) ein Motor ist, der für mehrere unterschiedliche Kraftstoffe geeignet ist.

13. Verfahren nach Anspruch 12,
Bereitstellen des ersten Kraftstoffs oder des zweiten Kraftstoffs an den Energiewandler (4) in Abhängigkeit einer vorbestimmten Flugphase.

14. Verwendung einer Antriebsvorrichtung gemäß einem der Ansprüche 1 bis 11 in einem Luftfahrzeug.

15. Luftfahrzeug mit einer Antriebsvorrichtung gemäß einem der Ansprüche 1 bis 11.

## Revendications

1. Dispositif de propulsion pour un aéronef, le dispositif de propulsion comportant :
une unité de propulsion (1),
un convertisseur d'énergie (4),
une unité de commande,
dans lequel le convertisseur d'énergie (4) est adapté pour fournir de l'énergie de propulsion à l'unité de propulsion (1) par l'intermédiaire d'au moins un premier combustible,
dans lequel le convertisseur d'énergie (4) est adapté pour fournir de l'énergie de propulsion à l'unité de propulsion (1) par l'intermédiaire d'au moins un deuxième combustible,
dans lequel le premier combustible et le deuxième combustible sont des combustibles liquides différents,
dans lequel le convertisseur d'énergie (4) est un moteur adapté à plusieurs combustibles différents,
dans lequel l'unité de propulsion (1) est adaptée pour générer une poussée normale par l'énergie de propulsion, et
dans lequel l'unité de commande est adaptée pour commander la fourniture du premier combustible et du deuxième combustible au convertisseur d'énergie (4).

2. Dispositif de propulsion selon la revendication 1, comportant en outre :
un premier réservoir (6),
un deuxième réservoir (11),
dans lequel le premier réservoir (6) est adapté pour mettre le premier combustible à la disposition du convertisseur d'énergie (4),
dans lequel le deuxième réservoir (11) est adapté pour mettre le deuxième combustible à la disposition du convertisseur d'énergie (4).

3. Dispositif de propulsion selon l'une quelconque des revendications 1 à 2, comportant également :
un convertisseur d'énergie supplémentaire (5) pour générer une seconde énergie de propulsion.

4. Dispositif de propulsion selon la revendication 3,
dans lequel le premier réservoir (6) est adapté pour mettre le premier combustible à la disposition du convertisseur d'énergie supplémentaire (5),
dans lequel le deuxième réservoir (11) est adapté pour mettre le deuxième combustible à la disposition du convertisseur d'énergie supplémentaire (5),
dans lequel le convertisseur d'énergie supplémentaire (5) est adapté pour fournir de l'énergie de propulsion à l'unité de propulsion (1) par l'intermédiaire du premier combustible ou du deuxième combustible.

5. Dispositif de propulsion selon la revendication 3, comportant en outre :
un troisième réservoir avec un troisième combustible, et
un quatrième réservoir avec un quatrième combustible,
dans lequel le convertisseur d'énergie supplémentaire (5) est adapté pour fournir de l'énergie de propulsion à l'unité de propulsion (1) par l'intermédiaire du troisième combustible ou du quatrième combustible.

6. Dispositif de propulsion selon l'une quelconque des revendications 3 à 5,
dans lequel le premier convertisseur d'énergie (4) diffère du convertisseur d'énergie supplémentaire (5).

7. Dispositif de propulsion selon l'une quelconque des revendications 3 à 6, comportant en outre :
un premier arbre de propulsion (2), et
un second arbre de propulsion (7),
dans lequel le premier arbre de propulsion (2) est adapté pour transmettre la première énergie de propulsion du convertisseur d'énergie (4) à l'unité de propulsion (1),
dans lequel le second arbre de propulsion (7) est adapté pour transmettre la seconde énergie de propulsion du convertisseur d'énergie supplémentaire (5) à l'unité de propulsion (1).

8. Dispositif de propulsion selon l'une quelconque des revendications 3 à 7, comportant également :
un premier dispositif d'accouplement (3),
dans lequel le premier arbre de propulsion (2) et le second arbre de propulsion (7) peuvent être accouplés par le premier dispositif d'accouplement (3).

9. Dispositif de propulsion selon l'une quelconque des revendications 3 à 8, comportant de plus :
un deuxième dispositif d'accouplement (8),
un troisième dispositif d'accouplement (9),
dans lequel le premier arbre de propulsion (2) est accouplé à l'unité de propulsion (1) par le deuxième dispositif d'accouplement (8), de telle sorte que la première énergie de propulsion peut être transmise à l'unité de propulsion (1),
dans lequel le second arbre propulsion (7) est accouplé à l'unité de propulsion (1) par le troisième dispositif d'accouplement (9), de telle sorte que la seconde énergie de propulsion peut être transmise à l'unité de propulsion (1).

10. Dispositif de propulsion selon l'une quelconque des revendications 3 à 9, comportant en outre :
une unité de commande,
dans lequel l'unité de commande est adaptée pour commander au moins un convertisseur parmi le convertisseur d'énergie (4) et le convertisseur d'énergie supplémentaire (5).

11. Dispositif de propulsion selon la revendication 10,
dans lequel le dispositif de commande est adapté pour commander le convertisseur d'énergie (4) et le convertisseur d'énergie supplémentaire (5), de telle sorte que dans un premier état de fonctionnement, la première énergie de propulsion et la seconde énergie de propulsion peuvent être fournies à l'unité de propulsion (1),
dans lequel le dispositif de commande est adapté pour commander le convertisseur d'énergie (4) et le convertisseur d'énergie supplémentaire (5), de telle sorte que dans un second état de fonctionnement, la première énergie de propulsion ou la seconde énergie de propulsion peut être fournie à l'unité de propulsion (1).

12. Procédé pour propulser un aéronef, le procédé impliquant les étapes consistant à :
fournir un premier combustible à un convertisseur d'énergie (4),
fournir un deuxième combustible au convertisseur d'énergie (4),
commander la fourniture du premier combustible et du deuxième combustible au convertisseur d'énergie (4),
générer de l'énergie de propulsion avec le convertisseur d'énergie (4) par l'intermédiaire d'au moins un des premiers combustibles et deuxièmes combustibles,
alimenter une unité de propulsion (1) en énergie de propulsion,
générer une poussée normale par l'intermédiaire de l'unité de propulsion (1),
dans lequel le premier combustible et le deuxième combustible sont des combustibles liquides différents,
dans lequel le convertisseur d'énergie (4) est un moteur adapté à plusieurs combustibles différents.

13. Procédé selon la revendication 12, comportant l'étape consistant à :
fournir le premier combustible ou le second combustible au convertisseur d'énergie (4) en fonction d'une phase de vol prédéterminée.

14. Utilisation d'un dispositif de propulsion selon l'une quelconque des revendications 1 à 11 dans un aéronef.

15. Aéronef comportant un dispositif de propulsion selon l'une quelconque des revendications 1 à 11.
